# EUROPEAN PATENT APPLICATION

(11) **EP 2 485 564 A1**
(43) Date of publication of application: **08.08.2012**
(21) Application number: 11290074.1
(22) Date of filing: 04.02.2011
(51) Int. Cl.: H04W 88/16

(54) **Virtual femto gateway for connecting femto cells to a core network and corresponding method**

(71) Applicant: Alcatel Lucent, 75007 Paris (FR)
(72) Inventor: Cherubini, Davide, Dublin (IE)
(74) Representative: Knights, Rupert

(57) **Abstract**

A method of providing a connection of femto cells to a core network of an operator. One or more virtual femto gateways are provided which are associated with the operator of the core network. One or more femto cells are connected to the core network through the or each virtual femto gateway. The one or more of the virtual femto gateways associated with each operator comprise/s a virtual instance created in a femto gateway of another operator.

## Description

This section introduces aspects that may be helpful to facilitating a better understanding of the invention. Accordingly, the statements of this section are to be read in this light and are not to be understood as admissions about what is prior art or what is not the prior art.

The present invention relates to a network. In particular, but not exclusively, it relates to a network comprising a virtual gateway.

There is a current trend in wireless cellular systems to be able to provide targeted cellular deployments. This new type of deployment generally uses a type of cell which is commonly referred to as a femtocell or small cell. A femtocell is, in effect, a small cellular base station, typically designed for use in a home or small business.

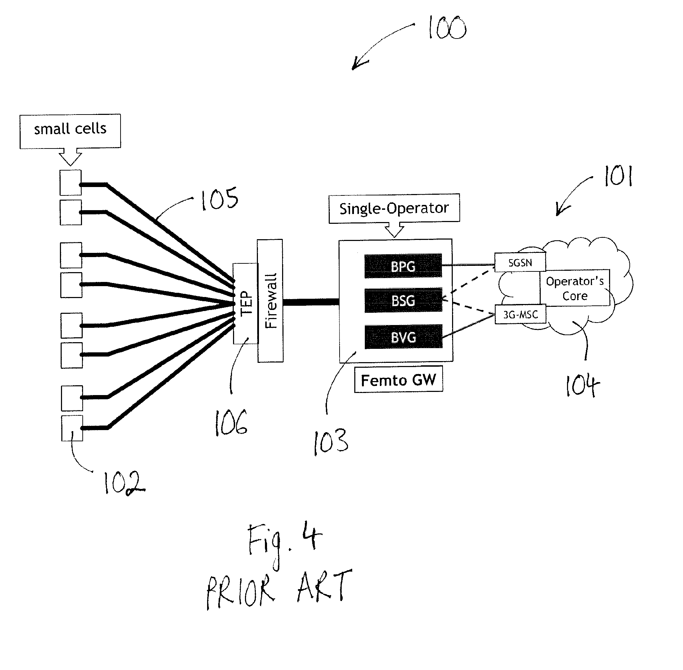

With reference to Figure 4, there is shown a general overview of an existing BSR (Base Station Router) femto solution 100.

On a Core network side 101 the system behaves like a traditional 3GPP RNC (Radio Network Controller). The radio interface is, however, ported to CPE (Customer Premises Equipment), which equipment comprises BSR femtocells 102, wherein the RNC functionality is mainly on the BSR femtocells themselves. A FGW (Femto Gateway) 103 concentrates the Iu traffic to ensure that the Operator's Core 104 does not need to cope with thousands of RNCs.

The FGW 103 is composed of the following gateway functions:
1) BPG (Base Station Router Packet Gateway), which acts as a concentrator for the IuPS (Iu Packet Switched) User Plane interface for the BSR Femto Cluster, presenting a single IP address towards a SGSN (Serving GPRS Support Node) from a "virtual RNC" represented by the FGW and BPG;
2) BVG (Base Station Router Voice Gateway), which creates the view of a single, virtual RNC, representing the IuCS (Iu Client Switched) User Plane of a complete BSR cluster, by presenting the Voice Gateway to the 3G-MSC as the single entity terminating the IuCS user plane; and
3) BSG (Base Station Router Signaling Gateway), which provides support for the signaling aspects of IuCS and IuPS interfaces towards a 3G-MSC (Mobile Switching Centre) and the SGSN, respectively.

As shown in Figure 4, the femtocells each create an IPSec (secure IP tunnel) 105 over xDSL, terminating towards a specific TEP (Tunnel End Point) 106. The traffic is then aggregated, sent to the FGW to be opportunely handled, and presented to the Operator's Core as originated by a single RNC.

The existing femto solution is a closed architecture. It can only accept the presence of a single MNO (Mobile Network Operator). The femto gateway (FGW) may be considered a "stand-alone" femto gateway. The MNO will generally own the whole infrastructure (with the possible exception of the backhaul line, e.g. xDSL, which can be provided by a 3^{rd} party operator). Whilst it is possible that one or more MVNO (Mobile Virtual Network Operators) can also be present, wherein these virtual operators may have an agreement with the hosting MNO in order to distribute 3G services to end users, only connection with a single 3G Core Network (the MNO's core) is possible.

Furthermore, using the existing solution, a brand new femtocell deployment can be economically burdensome (either in terms of capital expenditure or operating expenditure) for an operator. This can limit the distribution of the femtocell technology.

Finally, the MNO's offer can be limited by the local market/competitors and the MVNO's offer is firmly constrained by the hosting MNO's core capabilities/rates. In other words, the femtocell market can be closed and nationally constrained.

Accordingly, problems with existing targeted cellular deployments using femtocells, and the currently used architectures, include: the requirement for one operator to create the entire femto cluster infrastructure for its use; the limitation that the femto cluster infrastructure can only interconnect a single operator's core network; the limitation that the operator can only deploy femtocells and offer specific services in a limited region (generally nationwide); and a generally low overall energy efficiency of the femto clusters.

### Summary

Various embodiments provide solutions to one or more of the abovementioned problems.

According to a first embodiment, there is provided a network comprising a plurality of femtocells associated with a first operator and at least one virtual femto gateway associated with the first operator.

Preferably, traffic from at least two femtocells associated with the first operator is aggregated before being sent to the virtual femto gateway associated with the first operator.

Preferably, a plurality of femtocells are provided that are associated with one or more further operators and at least one further virtual femto gateway is provided in association with each of the operators, wherein traffic from at least two femtocells associated with each further operator is aggregated before being sent to the virtual femto gateway associated with that operator.

Preferably, each of the at least two femtocells associated with the first operator, and/or each of the femtocells associated with any of the further operators, is configured to connect to a tunnel end point associated only with that operator through a secure IP tunnel, and all of the data received from the femtocells at that tunnel end point is aggregated before being sent to the virtual femto gateway associated exclusively with that operator.

The network may be configured so that the aggregated data received from the femtocells associated with each operator is sent to the virtual femto gateway associated exclusively with that operator through a virtual local area network.

The network may be configured so that each virtual femto gateway is connected to a specific associated operator core through an IP network.

The network may be configured so that the traffic is IP routed to the specific associated operator core using a secure tunnelling protocol.

Preferably, the virtual femto gateways comprise open application programming interfaces.

Preferably, a plurality of virtual femto gateways are provided in association with each operator, and all of the virtual femto gateways associated with each operator are connected to a core network of that operator.

Preferably, one or more of the virtual femto gateways associated with each operator comprises a virtual instance created in a femto gateway of another operator.

Preferably, each virtual femto gateway which comprises a virtual instance in a femto gateway of another operator is connected to the core network of the operator associated with that virtual femto gateway and the femto gateway in which the virtual instance is created is connected to the core network associated with the other operator.

Preferably, each femtocell is arranged to create the secure IP tunnel and to request a bulk configuration file through the tunnel, and a home device module is configured to send the bulk configuration file to the femtocell through the secure IP tunnel in accordance with the IP address of the femtocell, and the bulk configuration file contains an identifier for a specific tunnel end point, the tunnel end point being associated exclusively with the operator of the femtocell, such that a connection to the core network of that specific operator may be established.

According to a further embodiment, there is provided a method of providing a connection to a core network of an operator, comprising providing one or more virtual femto gateways associated with the operator of the core network and connecting one or more femto cells to the core network through the or each virtual femto gateway.

Preferably, each femtocell connects to a tunnel end point associated only with the operator of that femtocell through a secure IP tunnel, and all of the data received from the femtocells at that tunnel end point is aggregated before being sent to the virtual femto gateway associated exclusively with that operator.

Preferably, each femtocell creates the secure IP tunnel and requests a bulk configuration file through the tunnel, and a home device module sends the bulk configuration file to the femtocell through the secure IP tunnel in accordance with the IP address of the femtocell, and the bulk configuration file contains an identifier for a specific tunnel end point, the tunnel end point being associated exclusively with the operator of the femtocell, such that a connection to the core network of that specific operator may be established.

The method may comprise aggregating data from at least two femtocells associated with the first operator before sending the data to the virtual femto gateway associated with the first operator.

There may be a plurality of femtocells provided that are associated with one or more further operators and at least one further virtual femto gateway provided in association with each of the operators, wherein traffic from at least two femtocells associated with each further operator is aggregated before being sent to the virtual femto gateway associated with that operator.

Each of the at least two femtocells associated with any of the further operators, may connect to a tunnel end point associated only with that operator through a secure IP tunnel, and all of the data received from the femtocells at that tunnel end point may be aggregated before being sent to the virtual femto gateway associated exclusively with that operator.

Aggregated data received from the femtocells associated with each operator may be sent to the virtual femto gateway associated exclusively with that operator through a virtual local area network.

Each virtual femto gateway may be connected to a specific associated operator core through an IP network. The traffic may be IP routed to the specific associated operator core using a secure tunnelling protocol.

The virtual femto gateways may comprise open application programming interfaces.

A plurality of virtual femto gateways may be provided in association with each operator, and all of the virtual femto gateways associated with each operator may be connected to a core network of that operator.

One or more of the virtual femto gateways associated with each operator may comprise a virtual instance created in a femto gateway of another operator.

Each virtual femto gateway which comprises a virtual instance in a femto gateway of another operator may be connected to the core network of the operator associated with that virtual femto gateway and the femto gateway in which the virtual instance is created may be connected to the core network associated with the other operator.

### Description of the Drawings

Embodiments will now be described, by way of example only, with reference to the accompanying drawings:
Figure 1 shows a femto cluster using the virtual femto gateway;
Figure 2 shows a possible association process between a femtocell of a given operator OPx and a corresponding virtual femto gateway;
Figure 3 shows a deployment of femtocells in other countries by a mobile operator, IE OP, in Ireland; and
Figure 4 shows an existing BSR femto solution.

### Detailed Description of Embodiments

With reference to the figures, and in accordance with one or more embodiments, there is provided a network 1 featuring a plurality of femtocells 5 and a plurality of virtual femto gateways (FGWs) 6. The virtual femto gateways are each connected to a respective associated operator core Op1 to Op4.

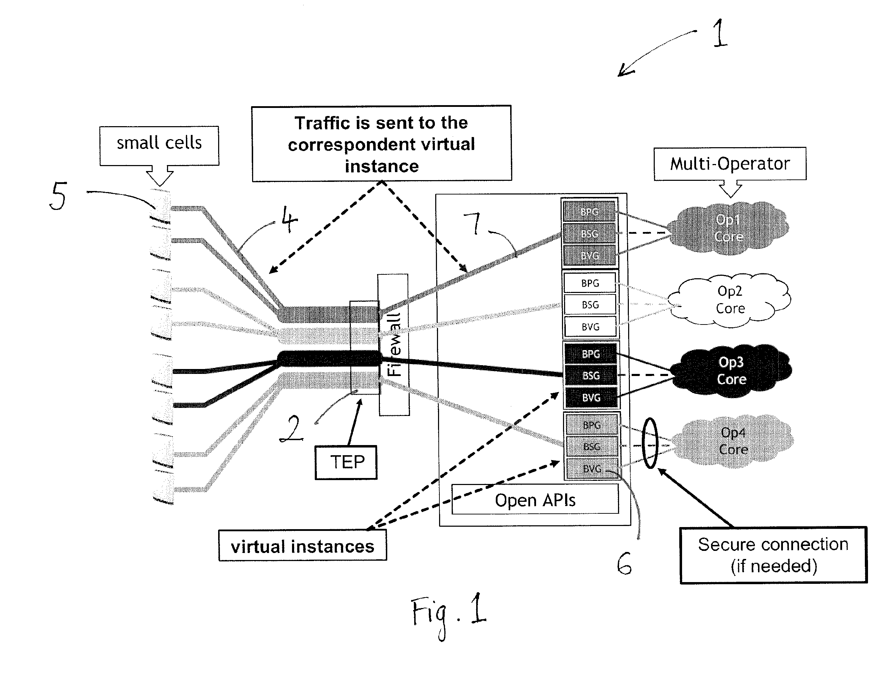

The example femto cluster of Figure 1 comprises eight femtocells 5. There are four operators Op 1 to Op4 in this example, wherein two femtocells are associated with each operator. It should be appreciated that any number of operators may be provided with any number of femtocells associated with each operator. In practice there will be a far greater number of femtocells provided than is shown. Traffic generated by femtocells of different operators is aggregated by operator and sent to the virtual femto gateway associated with the respective operator. Accordingly, traffic generated by femtocells of different operators can be accepted and multiple core networks, including but not limited to remote cores, can be interconnected by virtue of the virtual femto gateway. If the interconnection with the core network is realized through an untrusted network (e.g. the Internet), this will preferably be secured using a secure tunneling protocol such as, but not limited to, IPSec.

Traffic that is generated by any one of the femtocells is sent to a specific TEP (tunnel end point) 2 through an IPSec (secure IP tunnel) 4, wherein it is identified at the tunnel end point using a predetermined policy. The specific tunnel end point is associated exclusively with the operator of the femtocell that generated the traffic. The traffic may be identified based on the IP address of the femtocell that generated it. Alternative identifiers will, however, be readily appreciated by those skilled in the art. The traffic received at the tunnel end point, from all of the femtocells of the same operator that are connected though their own secure IP tunnels, is aggregated before being sent to a respective virtual femto gateway 6 of that operator through a specific virtual local area network (VLAN) 7. With multiple operators, as shown, there will be multiple tunnel end points provided, each of which is specific to one of the multiple operators and arranged to receive traffic from the femtocells of that operator only and to pass that traffic onto a virtual femto gateway of that operator.

It is possible to create a large number of virtual FGW instances. The maximum number is only bounded by the available physical hardware virtually shared among the operators.

The virtual femto gateway(s) can integrate Open APIs (Open Application Programming Interfaces) to allow each operator the creation of specific services and/or functions.

The virtual femto gateways are each composed of the following gateway functions:
1) BPG (Base Station Router Packet Gateway), which acts as a concentrator for the IuPS User Plane interface for the BSR Femto Cluster, presenting a single IP address towards a SGSN (Serving GPRS Support Node) from a "virtual RNC" represented by the FGW and BPG;
2) BVG (Base Station Router Voice Gateway), which creates the view of a single, virtual RNC, representing the IuCS User Plane of a complete BSR cluster, by presenting the Voice Gateway to the 3G-MSC as the single entity terminating the IuCS user plane; and
3) BSG (Base Station Router Signaling Gateway), which provides support for the signaling aspects of IuCS and IuPS interfaces towards a 3G-MSC and the SGSN, respectively.

These virtual femto gateways are created as virtual instances. Each virtual instance is arranged to emulate the functions and functionalities of the "stand-alone" femto gateway and therefore is able to independently connect to a group of femtocells and to a given 3G core network.

Each of the virtual femto gateways is connected to a corresponding operator core. The operator cores may be traditional 3GPP RNCs. For 3G femto cells, the Core Network is a traditional 3G Core. The femto cluster can be seen as an RNC, which is an element of the UMTS (Universal Mobile Telecommunications System) access network. A secure connection between each core and its respective virtual femto gateway may be provided if necessary.

Preferably, virtual instances of the femto gateways are provided in the same box, which enables the femto gateway to connect with multiple 3G Core networks in the same time/scenario.

The system can use virtual or real network interfaces for the interconnection with the tunnel end point (TEP) and the Core Network.

The instance can be created as a whole virtual machine (i.e. the whole Operating System is virtually replicated) or as a virtual replication of the gateway functions within the same operating system. Alternative virtualization techniques will, however, be readily appreciated by those skilled in the art.

The communication between virtual instances may be possible by means of virtual network interfaces. Alternative virtual interconnection techniques will, however, be readily appreciated by those skilled in the art.

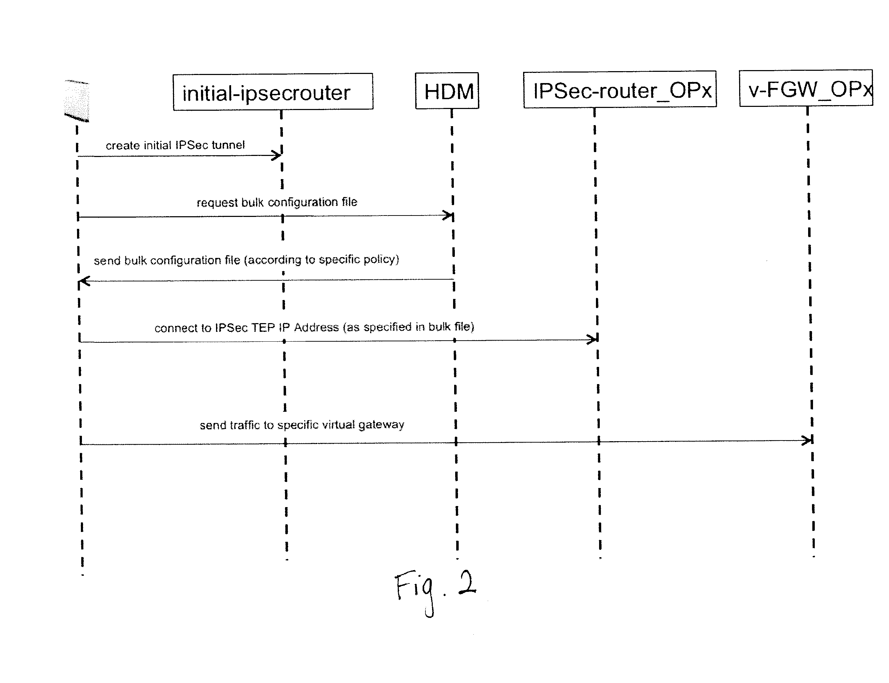

Figure 2 shows a possible implementation of the association process between the femtocell of a given operator OPx and the corresponding virtual femto gateway associated with that operator.

In a first step, the femtocells each create an initial IPSec tunnel (secure IP tunnel) over xDSL (or alternative broadband connection) with an IPSec (IP Security) router. In a second step, a bulk configuration file is requested from an HDM (Home Device Manager). Following receipt of the request for a bulk configuration file, in a third step, the HDM sends a bulk configuration file back to the femtocell, in accordance with a predetermined specific policy. In the present embodiment this policy is based on the IP address of the femtocell, which is provided to the HDM during request of the bulk configuration file. Following receipt of the bulk configuration file by the femtocell, in a fourth step, the femtocell connects to a specific TEP (tunnel end point) of a given operator, OPx, through the IPSec tunnel (secure IP tunnel). The data from the femtocell along with the data from each of the other femtocells associated with operator OPx is aggregated. Finally, in a fifth step, the data aggregated at the tunnel end point is sent to the virtual femto gateway of operator OPx.

All femtocells in the cluster will perform the abovementioned steps with all the femtocells of each operator being provided with the same bulk configuration file, such that all of the femtocells of the same operator connect to the same TEP that is specific to the operator of those femtocells and all of the femtocells of the other operators connect to the specific TEPs of their respective operators in the same manner. By virtue of this arrangement, all traffic for each of the specific operators may be aggregated and passed on to the specific femto gateway of that operator.

A possible market application of the present embodiment is where a mobile network operator intends to offer femto-based services in a foreign country, so as to develop an international presence. A further possible market application is where a local operator wants to deploy femtocells without the creation of a brand new femto cluster.

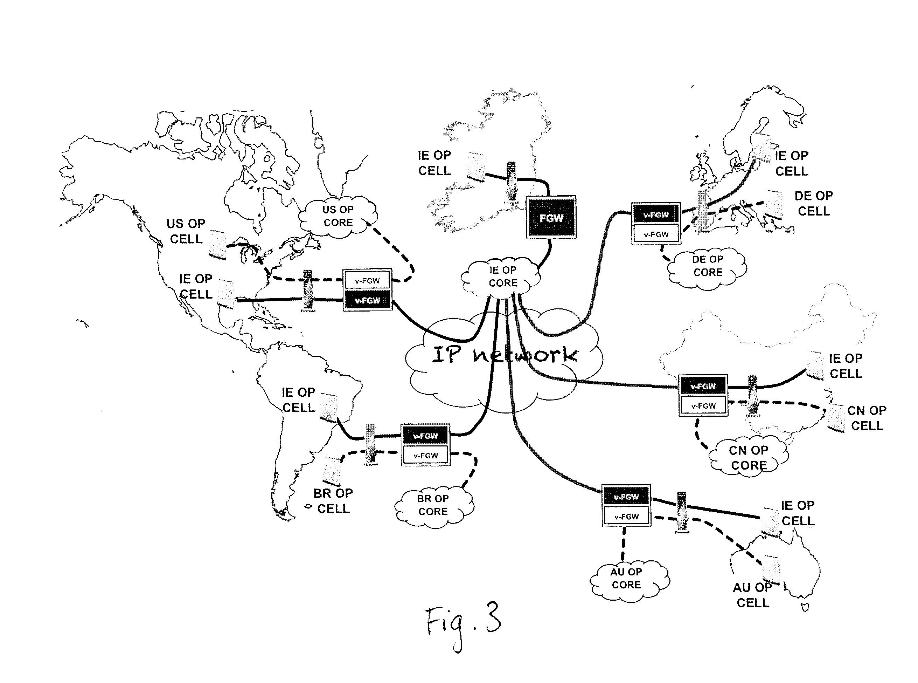

Figure 3 shows, as an example, the deployment by an Irish Mobile Operator (IE OP) of femtocells in other countries (USA, Brazil, Australia, China, and Germany, in the example). This is also applicable where the Irish operator wants to create an international multisite Femto VPN (Virtual Private Network) deploying femtocells overseas.

In its home country (Ireland in the present example), an operator (IE OP) may deploy femtocells using the standard "stand-alone" FGW. It should be appreciated, however, that a virtual femto gateway may alternatively be implemented in the home country. In any foreign country, in which the Operator intends to deploy femtocells, the Operator may sign an agreement with a local MNO to use the local licensed 3G frequencies (the same existing agreement as is available for Mobile Virtual Network Operators (MVNOs)).

Overseas, in any desired country, the Operator will connect the femtocells to a virtual instance specifically created in the foreign femto gateway, in the manner as described above, which foreign femto gateway is owned by the local MNO (DE OP, for example, in the case of Germany in the present example) or by a 3^{rd} party company. The generated traffic will then be IP routed (protected if this is the case using a secure tunneling protocol, or otherwise) to the home operator's core network in the home country (Ireland in the present example).

Femtocells deployed by the local operator in the foreign country (for example, DE OP in Germany) will be connected to the respective virtual instance of the femto gateway and the traffic will be routed to the local operator's core.

In Figure 3, virtual instances of the Irish Operator's (IE OP) femto gateway (FGW) are shown with black boxes and the interconnection links are solid lines. Local operator virtual instances in each of the foreign countries are represented by white boxes and the interconnection links are dashed lines.

It should be noted that whilst the embodiments have been described in the context of 3G networks, the present invention is not limited thereto and the invention may be applied to other networks, including but not limited to upcoming 4G networks, as will be readily appreciated by those skilled in the art.

By virtue of the embodiments, the use of a single virtual shared gateway for femto cells is enabled among multiple mobile network operators.

General advantages of the embodiments include: the allowance of virtual coexisting Mobile Network Operators (both local and remote); the ability of MVNOs to integrate the femtocells into their offer; reduced capital expenditure (hardware) and operating expenditure (co-location, power supply, management services, etc); an overall reduction in power consumption; the ability to use APIs to develop new applications/services (e.g. an MVNO can choose the destination core network).

Advantages of the embodiments to guest operators (who can also be MNOs) include: the possibility of the use of normal MVNO agreements for the use of "macro spectrum"; the possibility of the use of special MVNO agreements for the use of "home spectrum" (i.e. reduced price); the ability to offer their own domestic services (e.g. local call rates, VoIP, VAS); the opportunity to act as new player in the enterprise market (e.g. multisite VPN including femto services).

Advantages of the embodiments to host operators include: the ability to offload the host's core network, since the guest MNO may use its own core network; the ability of the guest operator to manage the guest's femto cells; and the creation of a new product for the wholesale market (virtual femto gateway presence).

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. A network comprising a plurality of femtocells associated with a first operator and at least one virtual femto gateway associated with the first operator.

2. A network as claimed in Claim 1, arranged so that traffic from at least two femtocells associated with the first operator is aggregated before being sent to the virtual femto gateway associated with the first operator.

3. A network as claimed in Claim 1 or 2, wherein a plurality of femtocells are provided that are associated with one or more further operators and at least one further virtual femto gateway is provided in association with each of the operators, wherein traffic from at least two femtocells associated with each further operator is aggregated before being sent to the virtual femto gateway associated with that operator.

4. A network as claimed in Claim 2 or 3, wherein each of the at least two femtocells associated with the first operator, and/or each of the femtocells associated with any of the further operators, is configured to connect to a tunnel end point associated only with that operator through a secure IP tunnel, and all of the data received from the femtocells at that tunnel end point is aggregated before being sent to the virtual femto gateway associated exclusively with that operator.

5. A network as claimed in Claim 4, configured so that the aggregated data received from the femtocells associated with each operator is sent to the virtual femto gateway associated exclusively with that operator through a virtual local area network.

6. A network as claimed in any preceding claim, configured so that each virtual femto gateway is connected to a specific associated operator core through an IP network.

7. A network as claimed in any preceding claim, configured so that the traffic is IP routed to the specific associated operator core using a secure tunnelling protocol.

8. A network as claimed in any preceding claim, wherein the virtual femto gateways comprise open application programming interfaces.

9. A network as claimed in any preceding claim, wherein a plurality of virtual femto gateways are provided in association with each operator, and all of the virtual femto gateways associated with each operator are connected to a core network of that operator.

10. A network as claimed in Claim 9, wherein one or more of the virtual femto gateways associated with each operator comprises a virtual instance created in a femto gateway of another operator.

11. A network as claimed in Claim 10, wherein each virtual femto gateway which comprises a virtual instance in a femto gateway of another operator is connected to the core network of the operator associated with that virtual femto gateway and the femto gateway in which the virtual instance is created is connected to the core network associated with the other operator.

12. A network as claimed in any of Claims 4 to 11, wherein each femtocell is arranged to create the secure IP tunnel and to request a bulk configuration file through the tunnel, and a home device module is configured to send the bulk configuration file to the femtocell through the secure IP tunnel in accordance with the IP address of the femtocell, and the bulk configuration file contains an identifier for a specific tunnel end point, the tunnel end point being associated exclusively with the operator of the femtocell, such that a connection to the core network of that specific operator may be established.

13. A method of providing a connection to a core network of an operator, comprising providing one or more virtual femto gateways associated with the operator of the core network and connecting one or more femto cells to the core network through the or each virtual femto gateway.

14. A method as claimed in Claim 13, wherein each femtocell connects to a tunnel end point associated only with the operator of that femtocell through a secure IP tunnel, and all of the data received from the femtocells at that tunnel end point is aggregated before being sent to the virtual femto gateway associated exclusively with that operator.

15. A method as claimed in Claim 14, wherein each femtocell creates the secure IP tunnel and requests a bulk configuration file through the tunnel, and a home device module sends the bulk configuration file to the femtocell through the secure IP tunnel in accordance with the IP address of the femtocell, and the bulk configuration file contains an identifier for a specific tunnel end point, the tunnel end point being associated exclusively with the operator of the femtocell, such that a connection to the core network of that specific operator may be established.

## Amended claims

### Amended claims in accordance with Rule 137(2) EPC.

**1.** A network (1) comprising a plurality of femtocells (5) associated with a first operator and at least one femto gateway associated with the first operator, **characterised in that** the or each femto gateway is a virtual femto gateway (6), which is created as a virtual instance arranged to emulate the functions and functionalities of a standalone femto gateway, such that it may independently connect to a group of femtocells and to a given core network.

**2.** A network as claimed in Claim 1, arranged so that traffic from at least two femtocells associated with the first operator is aggregated before being sent to the virtual femto gateway associated with the first operator.

**3.** A network as claimed in Claim 1 or 2, wherein a plurality of femtocells are provided that are associated with one or more further operators and at least one further virtual femto gateway is provided in association with each of the operators, wherein traffic from at least two femtocells associated with each further operator is aggregated before being sent to the virtual femto gateway associated with that operator.

**4.** A network as claimed in Claim 2, wherein each of the at least two femtocells associated with the first operator is configured to connect to a tunnel end point associated only with that operator through a secure IP tunnel, and all of the data received from the femtocells at that tunnel end point is aggregated before being sent to the virtual femto gateway associated exclusively with that operator.

**5.** A network as claimed in Claim 4, configured so that the aggregated data received from the femtocells associated with each operator is sent to the virtual femto gateway associated exclusively with that operator through a virtual local area network.

**6.** A network as claimed in any preceding claim, configured so that each virtual femto gateway is connected to a specific associated operator core through an IP network.

**7.** A network as claimed in any preceding claim, configured so that the traffic is IP routed to the specific associated operator core using a secure tunnelling protocol.

**8.** A network as claimed in any preceding claim, wherein the virtual femto gateways comprise open application programming interfaces.

**9.** A network as claimed in any preceding claim, wherein a plurality of virtual femto gateways are provided in association with each operator, and all of the virtual femto gateways associated with each operator are connected to a core network of that operator.

**10.** A network as claimed in Claim 9, wherein one or more of the virtual femto gateways associated with each operator are created in a femto gateway of another operator.

**11.** A network as claimed in Claim 10, wherein each virtual femto gateway which is created in a femto gateway of another operator is connected to the core network of the operator associated with that virtual femto gateway and the femto gateway in which the virtual instance is created is connected to the core network associated with the other operator.

**12.** A network as claimed in any of Claims 4 to 11, wherein each femtocell is arranged to create the secure IP tunnel and to request a bulk configuration file through the tunnel, and a home device module is configured to send the bulk configuration file to the femtocell through the secure IP tunnel in accordance with the IP address of the femtocell, and the bulk configuration file contains an identifier for a specific tunnel end point, the tunnel end point being associated exclusively with the operator of the femtocell, such that a connection to the core network of that specific operator may be established.

**13.** A method of providing a connection to a core network of an operator, **characterised by** providing one or more virtual femto gateways (6) associated with the operator of the core network and connecting one or more femto cells (5) to the core network through the or each virtual femto gateway, the or each virtual femto gateway being created as a virtual instance arranged to emulate the functions and functionalities of a standalone femto gateway, such that it may independently connect to a group of femtocells and to a given core network.

**14.** A method as claimed in Claim 13, wherein each femtocell connects to a tunnel end point associated only with the operator of that femtocell through a secure IP tunnel, and all of the data received from the femtocells at that tunnel end point is aggregated before being sent to the virtual femto gateway associated exclusively with that operator.

**15.** A method as claimed in Claim 14, wherein each femtocell creates the secure IP tunnel and requests a bulk configuration file through the tunnel, and a home device module sends the bulk configuration file to the femtocell through the secure IP tunnel in accordance with the IP address of the femtocell, and the bulk configuration file contains an identifier for a specific tunnel end point, the tunnel end point being associated exclusively with the operator of the femtocell, such that a connection to the core network of that specific operator may be established.
